# EUROPÄISCHE PATENTSCHRIFT

(11) **EP 1 046 856 B1**
(45) Veröffentlichungstag und Bekanntmachung des Hinweises auf die Patenterteilung: **28.07.2004**
(21) Anmeldenummer: 00108143.9
(22) Anmeldetag: 13.04.2000
(51) Int. Cl.: F16L 55/26, F16L 55/28, F16L 55/38, B08B 9/04

(54) **Vorrichtung zum Bewegen eines Molches durch eine Rohrleitung und Dichteinrichtung für eine solche Vorrichtung**
Apparatus for moving a pig through a pipeline and a sealing device for such an apparatus
Appareil pour déplacer un furet dans une conduite et dispositif d'étanchéité pour un tel appareil

(30) Priorität: 23.04.1999 DE 19918538
(43) Veröffentlichungstag der Anmeldung: 25.10.2000
(73) Patentinhaber: PII Pipetronix GmbH, 76297 Stutensee (DE)
(72) Erfinder: Filippovitch, Sergei, Thornhill, Ontario L4J 8J7 (CA); Maki, Jukka, 00300 Helsinki (FI)
(74) Vertreter: Lempert, Jost, Dipl.-Phys. Dr. rer.nat.

(56) Entgegenhaltungen:
- WO-A-98/31479
- GB-A- 2 223 290
- US-A- 3 107 379
- US-A- 3 262 143
- US-A- 5 797 993

## Beschreibung

Die Erfindung betrifft eine Dichteinrichtung nach dem Oberbegriff des Anspruchs 1 sowie eine Vorrichtung zum Bewegen eines Molches durch eine Rohrleitung, wie eine Pipeline, nach dem Oberbegriff des Anspruchs 19.

Derartige Vorrichtungen zum Bewegen eines Molches durch eine Pipeline unter Einfluss des in dieser strömenden Fluids sind bekannt und werden z.B. zur Reinigung oder zur Kontrolle der Dichtigkeit von Rohrleitungen wie Pipelines eingesetzt, wobei das Zugteil zur Aufnahme einer Reinigungs- oder einer Meßeinrichtung geeignet ist, indem das in der Regel zylindrische Zugteil mit einer solchen Einrichtung bestückt oder eine solche Einrichtung an das Zugteil angekoppelt und von diesem mitgeschleppt wird. Um das Zugteil von dem in der Rohrleitung geförderten Medium anzutreiben, weist das Zugteil in der Regel wenigstens eine Dichteinrichtung auf, die an der Innenseite der Rohrleitung anliegt und gleichzeitig für eine zentrale Führung des Zugteils entlang der Längsmittelachse der Rohrleitung sorgt.

Der Durchmesser der Dichteinrichtung entspricht hierbei im wesentlichen der Normweite der entsprechenden Rohrleitung, so daß für die Kontrolle von Rohrleitungen mit verschiedenen Normweiten mehrere derartige Vorrichtungen erforderlich sind. Weist eine Rohrleitung Abschnitte mit Querschnittsveränderungen, wie Erweiterungen oder Verengungen, oder Verzweigungen, wie insbesondere T- oder Y-förmige Verzweigungen auf, so können derartige Rohrleitungen solche in der Regel nicht von Molchen durchfahren werden.

Die US 5 779 993 zeigt eine expandierbare Molcheinheit mit einem radial beweglichen Traggestell für eine Dichteinheit, die aus einem äußeren halbsteifen Elastomerring und einem vom Zentrum zum Ring hinragenden Diaphragma gebildet ist. Diese Dichteinrichtung kann eine hinreichende Dichtung bei Einsatz in einem Rohr gewährleisten, dessen Innendurchmesser etwas unter dem Außendurchmesser des Dichtrings liegt. Solche Einheiten müssen aber oft durch Rohrleitungssysteme bewegt werden, bei denen die Rohrleitungen deutlich unterschiedlichen Durchmesser haben. Ist der Durchmesser des Dichtringes bei dem vorgenannten Stand der Technik an ein Rohr mit einem geringeren Durchmesser angepasst, so kann keine Dichtwirkung (und damit kein Vorschub des Molches unter Einfluß des durch die Rohrleitung geförderten Mediums) in einer Rohrleitung mit größerem Durchmesser erzielt werden. Ist der Durchmesser des Dichtrings an eine Rohrleitung mit größerem Durchmesser angeordnet, so wird keine Dichtwirkung in einem Rohr mit geringerem Durchmesser erzielt, weil ein sicheres Anliegen nicht mehr gewährleistet.

Der Erfindung liegt die Aufgabe zugrunde, eine Vorrichtung der eingangs genannten Art dahingehend weiterzubilden, daß sie unter Gewährleistung der Dichtigkeit zwischen Dichteinrichtung und Rohrinnenwand zum Bewegen eines Molches in Rohrleitungen mit verschiedenen Querschnitten geeignet ist.

Erfindungsgemäß wird diese Aufgabe durch eine Dichteinrichtung der eingangs genannten Art mit den Merkmalen des Anspruchs 1 sowie durch eine gattungsgemäße Vorrichtung mit einer solchen Dichteinrichtung gelöst.

Die-erfindungsgemäße Dichteinrichtung ist derart ausgebildet, daß ein Dichtelement unter Gewährleistung der Dichtigkeit zwischen Dichtelement und Rohrinnenwand deformierbar ist, um innerhalb des für die Verwendung der Vorrichtung vorgesehenen Querschnittsbereichs von-Rohrleitungen stets für ein Anliegen an der Rohrinnenwand und somit für eine hohe Dichtigkeit zu sorgen.

Bei der erfindungsgemäß ausgestalteten Vorrichtung gewährleistet die Tragstruktur mit veränderbarem Umfang einen Einsatz der Vorrichtung in Rohrleitungen mit verschiedenen Querschnitten und insbesondere in solchen Rohrleitungen, die Querschnittsverengungen oder -erweiterungen aufweisen.

Bei der ersten Ausführungsvarianteder Dichteinrichtung ist der Radius der teilzylinderförmigen Dichtabschnitte aus einem flexiblen Material in Abhängigkeit des Querschnitts der Rohrleitung bzw. des entsprechenden Umfangs der Tragstruktur veränderlich, wobei die aneinander anliegenden bzw. aneinander gepreßten lateralen Endbereiche der Dichtabschnitte stets eine hohe Dichtigkeit gewährleisten.

Bei der zweiten Ausführungsvariante ist ein einstückig ausgebildeter, in Umfangsrichtung gewellter Dichtring vorgesehen, welcher in Abhängigkeit des Querschnitts einer Rohrleitung bzw. des entsprechenden Umfangs der Tragstruktur faltbar ist und stets an der Rohrinnenwand anliegt. Der Dichtring kann beispielsweise derart ausgebildet sein, daß er bei der größten für eine solche Vorrichtung vorgesehene Rohrweite bzw. für den größtmöglichen Umfang der Tragstruktur nur gering oder gar nicht und bei kleinstmöglichem Umfang der Tragstruktur stark gewellt ist.

Das Dichtelement besteht vorzugsweise aus einem Polymer und aufgrund der geringen Verschleißanfälligkeit insbesondere aus Polyurethan.

Die Dichteinrichtung weist bevorzugt eine Dichtmembran auf, welche sich von dem bzw. den am Umfang der Tragstruktur angeordneten Dichtelementen radial zum Zugteil erstreckt, an letztgenanntem beispielsweise auf beliebige Weise befestigbar ist. Die Dichtmembran ist insbesondere radial innenseitig am Dichtelement angeordnet, wobei in bevorzugter Ausführung vorgesehen ist, daß Dichtelement und Dichtmembran dicht miteinander verbunden sind. Im Falle eines einstückig ausgebildeten Dichtelements in Form eines Dichtrings können Dichtring und Membran gegebenenfalls auch einstückig ausgebildet sein.

Die Dichteinrichtung ist vorzugsweise schüsselförmig mit einer in Schlepprichtung des Zugteils gerichteten Konvexität ausgebildet, wobei die Konvexität der Dichteinrichtung zunimmt, je enger die Rohrleitung bzw. je kleiner der veränderbare Umfang der Tragstruktur ist. Die Dichtmembran ist in diesem Fall vorzugsweise ebenfalls schüsselförmig mit einer mit der Konvexität der Dichteinrichtung gleichgerichteten Konvexität ausgebildet, um Querschnittsveränderungen einer Rohrleitung aufzunehmen.

Die Dichtmembran weist vorzugsweise ein flexibles Gewebe auf, welches insbesondere von netzartig miteinander verwobenen, z. B. über endseitige Schlaufen an der Tragstruktur festgelegten Bändern gebildet ist und beispielsweise sich sowohl axial als auch radial erstreckende Bänder aufweisen kann, wobei entweder mehrere teilzylinderförmige Dichtelemente oder ein einstückig ausgebildeter Dichtring mit den radial verlaufenden Bändern verbunden sind. Das die Membran bildende, aus miteinander vernähten Bändern bestehende Gewebe besteht vorzugsweise aus einm Polymer, insbesondere aus einem Polyamid, wie Nylon, Perlon oder dgl.

Die Tragstruktur mit veränderbarem Umfang weist vorzugsweise um jeweils zur Längsmittelachse des Zugteils senkrechte Achsen schwenkbare, im wesentlichen strahlenartig angeordnete Tragarme auf, an deren äußeren Enden das Dichtelement bzw. die Dichtelemente schwenkbar angelenkt sind. Eine derartige schwenkbare Befestigung an den Tragarmen ermöglicht insbesondere den Durchlauf einer erfindungsgemäßen Vorrichtung durch Rohrkrümmungen, ohne einerseits das Dichtelement zu beschädigen und andererseits stets für ein Anliegen der Dichtelemente an der Rohrinnenwand und somit für eine hohe Dichtigkeit zu sorgen.

Die Tragarme sind vorzugsweise mit einer Federkraft radial nach außen vorgespannt, so daß sich die Dichteinrichtung automatisch an Rohrleitungen mit verschiedenen Querschnitten anpaßt. Die Tragarme sind zweckmäßig mit einer im wesentlichen identischen Federkraft radial nach außen vorgespannt, um gleichzeitig eine zentrale Führung des Zugteils bzw. mit dem Zugteil verbundenen Reinigungs-, Meßeinrichtungen oder dgl. zu gewährleisten. Die Tragarme können beispielsweise jeweils mittels eines Tellerfederpakets radial nach außen vorgespannt sein.

Vorzugsweise weist jeder Tragarm an seinem äußeren Ende eine Rolle zur Führung entlang der Innenwand einer Rohrleitung auf, so daß das beispielsweise über an den äußeren Enden der Tragarme angeordnete schwenkbare Aufnahmen befestigte Dichtelement mit einem vorherbestimmbaren Anpreßdruck gegen die Rohrinnenwand beaufschlagbar ist und der Verschleiß desselben durch Reibung an der Rohrinnenwand vermindert wird.

Um ein Beschädigen sowohl einer Rohrleitung als auch eines Tragarms insbesondere in Rohrkrümmungen, in denen insbesondere bei Rohren mit kleinem Querschnitt zumindest einige der Tragarme eine im wesentlichen zur Längsmittelachse des Rohres parallele Extrempositionen erreichen können, zu verhindern, weist jeder Tragarm vorzugsweise im Bereich seiner Schwenkachse eine Stützrolle zur Abstützung an der Innenwand des Rohres auf.

Eine Weiterbildung sieht vor, daß die Tragarme synchronisiert sind. Derart ist die Dichteinrichtung insbesondere auch für solche Rohrleitungen bzw. Pipelines geeignet, welche beliebige, z.B. Y- oder T-förmige Verzweigungen aufweisen, indem beim Durchlauf einer Dichteinrichtung durch solche Verzweigungen diejenigen radial nach außen vorgespannten Tragarme, die aufgrund der Verzweigung keinen Gegendruck von der Rohrinnenwand erfahren, von den benachbarten Tragarmen, welche an der der Verzweigung gegenüberliegenden Rohrinnenwand anliegen, gehalten sind, so daß die freien Tragarme nicht radial ausfedern können und somit eine Beschädigung des Dichtelements und/oder der Membran zuverlässig verhindert wird. Vorzugsweise sind jeweils zwei benachbarte Tragarme unter Gewährleistung eines um zwischen 1° und 5°, insbesondere zwischen 2° und 3°, voneinander abweichenden Winkels zur Längsmittelachse des Zugteils synchronisiert.

Die Tragarme könne beispielsweise mit Abstand zu ihren Schwenkachsen sich parallel zu diesen erstreckende Stifte aufweisen, wobei jeweils zwei Stifte benachbarter Tragarme mit ihren einander zugekehrten Enden in eine ihnen gemeinsame, eine begrenzte Relativbewegung der Stifte gewährleistende Halteeinrichtung ragen, wobei die begrenzte Relativbewegung insbesondere einer Winkeldifferenz zwischen 1° und 5° der Winkel zwischen den jeweiligen Tragarmen und der Längsmittelachse des Zugteils entspricht. Die Halteeinrichtungen können beispielsweise von Klammern gebildet sein.

Die Tragarme können alternativ mit Abstand zu ihren Schwenkachsen jeweils abwechselnd eine bzw. zwei Führungsplatten aufweisen, wobei jeweils eine Führungsplatte eines Tragarms zwischen jeweils zwei Führungsplatten der benachbarten Tragarme unter Gewährleistung einer begrenzten Relativbewegung eingreift. Anstatt die Tragarme abwechselnd mit jeweils einer bzw. zwei Führungsplatten zu versehen, kann jeder Tragarm mit Abstand zu seiner Schwenkachse eine in Richtung des einen benachbarten Tragarms gerichtete Führungsplatte und zwei in Richtung des anderen benachbarten Tragarms gerichtete Führungsplatten aufweisen, wobei die in Richtung des einen benachbarten Tragarms gerichtete Führungsplatte jeweils unter Gewährleistung einer begrenzten Relativbewegung zwischen die zwei Führungsplatten dieses benachbarten Tragarms eingreift.

Untersuchungen haben gezeigt, daß die Tragstruktur zweckmäßig zwölf Tragarme aufweist, um für eine gute Führung des Zugteils entlang einer Rohrleitung und für eine hohe Dichtigkeit sowohl des von der Tragstruktur getragenen Dichtelements als auch einer gegebenenfalls an dem Dichtelement bzw. den Dichtelementen angeordneten Membran zu sorgen.

In bevorzugter Ausführung ist die Tragstruktur über eine am Zugteil festlegbare Zentralhülse an diesem befestigt. Weist das erfindungsgemäße Dichtelement eine Dichtmembran auf, so ist diese ebenfalls vorzugsweise an einer solchen Zentralhülse befestigt.

Um Druckstöße des in der Rohrleitung geförderten Mediums, sogenannte Schockwellen, aufzunehmen, ist die Zentralhülse vorzugsweise begrenzt axial verschiebbar am Zugteil festgelegt, so daß die erfindungsgemäße Dichteinrichtung im Falle einer solchen Schockwelle axial ausweichen kann und insbesondere Dichtelement und Membran nicht beschädigt werden. Die Zentralhülse ist insbesondere gegen Federwirkung axial verschiebbar am Zugteil festgelegt.

In weiterhin bevorzugter Ausführung ist die Zentralhülse radial schwenkbar, insbesondere über ein Kugelgelenk, am Zugteil festgelegt. Derart wird der Durchlauf von Rohrkrümmungen von insbesondere solchen Vorrichtungen erleichtert, die mehrere an einem Zugteil angeordnete Dichteinrichtungen aufweisen, indem zumindest einige der Dichteinrichtungen um das Zugteil schwenkbar sind und somit stets im wesentlichen senkrecht zur Längsmittelachse der Rohrleitung anordbar sind und die Tragstruktur der Dichteinrichtung somit stets einen im wesentlichen runden Querschnitt bildet, der einem geringen Verschleiß von Dichtelementen und einer hohen Dichtigkeit Rechnung trägt.

In bevorzugter Ausführung sind wenigstens zwei an einem Zugteil angeordnete Dichteinrichtungen vorgesehen, von denen wenigstens eine am Zugteils radial schwenkbar ist. Bei einer Vorrichtung mit einem zwei Dichteinrichtungen aufweisenden Zugteil können beispielsweise beide Dichteinrichtungen radial schwenkbar sein, oder nur eine Dichteinrichtung ist radial schwenkbar, während die andere nicht schwenkbar ist. In der Regel weist die erfindungsgemäße Vorrichtung drei oder vier Dichteinrichtungen auf, von denen beispielsweise die mittleren am Zugteil radial schwenkbar und die äußeren fest angeordnet sind. Selbstverständlich kann die erfindungsgemäße Vorrichtung auch mehrere solcher Dichteinrichtungen aufweisen, wobei bei einer Vorrichtung mit z.B. fünf Dichteinrichtungen die zweite und die vierte Dichteinrichtung am Zugteil radial schwenkbar sein können, während die erste, dritte und fünfte Dichteinrichtung radial fest angeordnet sein können. Wie bereits erwähnt, sind sämtliche Dichteinrichtungen unabhängig von deren Schwenkbarkeit vorzugsweise axial verschiebbar am Zugteil festgelegt.

Die Erfindung betrifft auch eine Dichteinrichtung für eine solche Vorrichtung zum Bewegen eines Molchs durch eine Rohrleitung, wie eine Pipeline, welche wenigstens eines der genannten Merkmale aufweist.

Nachfolgend ist die Erfindung anhand bevorzugter Ausführungsformen unter Bezugnahme auf die Zeichnungen näher erläutert. Es zeigen:
- Fig. 1: eine perspektivische Ansicht einer Dichteinrichtung einer erfindungsgemäßen Vorrichtung mit teilzylinderförmigen Dichtelementen ohne deren Tragstruktur;
- Fig. 2: eine Seitenansicht einer Tragstruktur einer Dichteinrichtung gemäß Fig. 1;
- Fig. 2a: einen Tragarm der Tragstruktur gemäß Fig. 2 im Längsschnitt;
- Fig. 3: eine Draufsicht auf die Tragstruktur gemäß Fig. 2;
- Fig. 4: ein einstückig ausgebildeter Dichtring einer erfindungsgemäßen Dichteinrichtung;
- Fig. 5: eine perspektivische Ansicht zweier benachbarter, mittels Führungsplatten synchronisierter Tragarme;
- Fig. 6: eine Seitenansicht einer Tragstruktur mit mittels in Halteeinrichtungen ragenden Stiften synchronisierten Tragarmen;
- Fig. 7: eine Draufsicht auf die Tragstruktur gemäß Fig. 6;
- Fig. 8: eine Seitenansicht einer Halteeinrichtung gemäß Fig. 6 und 7;
- Fig. 9: eine Seitenansicht der Halteeinrichtung gemäß Fig. 8 in Richtung Pfeil A;
- Fig. 10: eine schematische Ansicht einer Vorrichtung mit drei Dichteinrichtungen zur Veranschaulichung des Durchlaufs durch eine Rohrkrümmung und
- Fig. 11: eine schematische Ansicht der Vorrichtung gemäß Fig. 10 zur Veranschaulichung des Durchlaufs durch eine Y-förmige Rohrverzweigung.

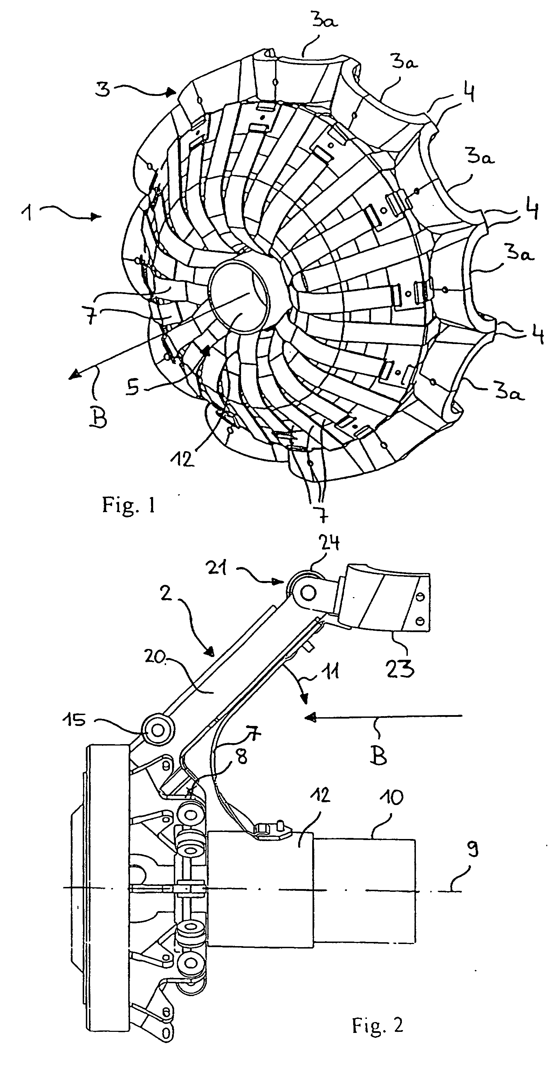

In Fig. 1 ist eine erfindungsgemäße Dichteinrichtung 1 aus Gründen der Übersichtlichkeit ohne die zugehörige Tragstruktur dargestellt. Ein Dichtelement 3 besteht aus mehreren, in Umfangsrichtung nebeneinander angeordneten, mit den lateralen Endbereichen 4 ihrer Außenseiten miteinander in Verbindung stehenden, teilzylinderförmigen Dichtabschnitten 3a, welche jeweils radial inneseitig mit einer Dichtmembran 5 verbunden sind. Die Dichtmembran 5 ist an einer Zentralhülse 12 zur Befestigung an einem (nicht dargestellten) Zugteil angeordnet. Die Dichtmembran (5) weist ein Gewebe von sowohl in radialer- als auch in Umfangsrichtung angeordneten, insbesondere über endseitige Schlaufen einer (nicht dargestellten) Tragstruktur befestigen Bändern 7 aus einem Polyamid, z.B. Nylon auf. Diese ist durch eine durchgehende Schicht abgedeckt, die beispielsweise aus Polyurethan beschichtetem Kevlar besteht. Die am Umfang der (nicht dargestellten) Tragstruktur angeordneten Dichtabschnitte 3a bestehen aus einem flexiblen Material, z.B. aus Polyurethan, und sind in Abhängigkeit vom Umfang der Dichteinrichtung 1 deformierbar, indem der Durchmesser der teilzylinderförmigen Dichtabschnitte 3a beispielsweise durch Komprimieren derselben verringerbar ist. Die aus den miteinander vernähten Bändern 7 bestehende Membran 5 ist ebenfalls flexibel und im wesentlichen schüsselförmig ausgebildet, wobei die Konvexität der Membran in Bewegungsrichtung der Dichteinrichtung 1 (Pfeil B) gerichtet ist.

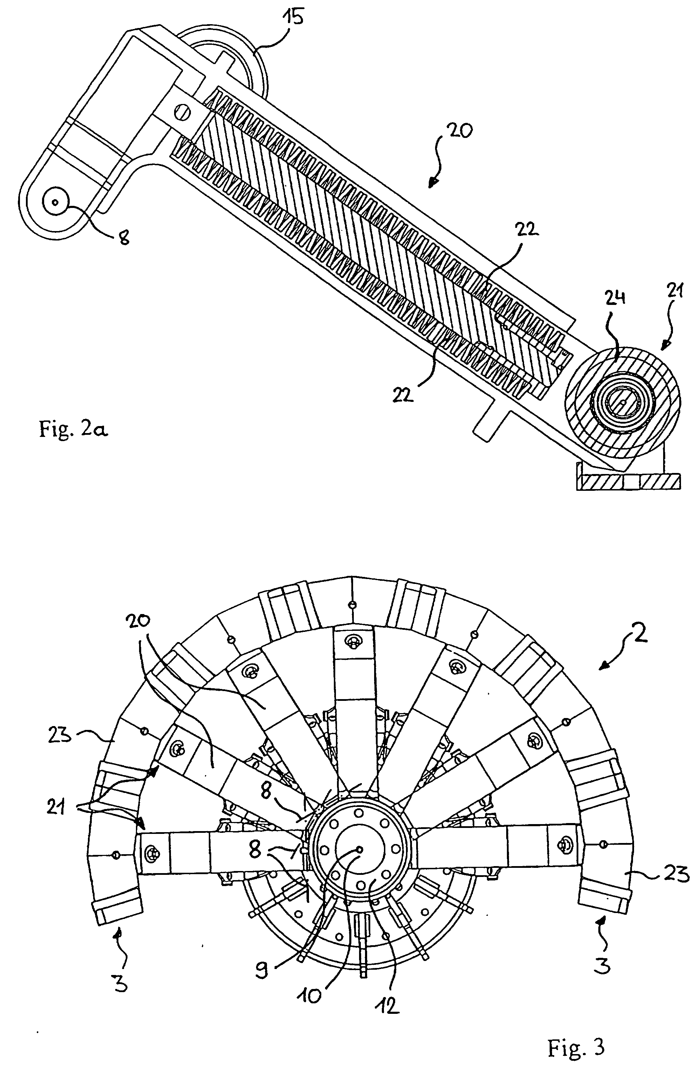

Fig. 2 zeigt die Tragstruktur 2 einer solchen Dichteinrichtung 1. Die Tragstruktur 2 weist zwölf um jeweils zur Längsmittelachse 9 eines Zugteils 10 senkrechte Achsen 8 schwenkbare, im wesentlichen strahlenförmig angeordnete Tragarme 20 auf, von denen einer exemplarisch in Fig. 2a dargestellt ist. Jeder Tragarm 20 ist mittels eines Tellerfederpakets 22 radial nach außen vorgespannt. Es können auch andersartige Federn, wie Schraubenfedern, eingesetzt werden. Der Tragarm 20 ist auf einer insbesondere gegen Federwirkung axial verschiebbaren Zentralhülse 12 am Zugteil 10 festgelegt. Die Hülse 12 kann grundsätzlich auch am Zugteil 10 unverschiebbar festgelegt sein. Jeder Tragarm 20 weist an seinem äußeren Ende 21 eine Aufnahme 23 für einen (nicht dargestellten) Dichtabschnitt 3a gemäß Fig. 1 auf, wobei die Aufnahme 23 schwenkbar am Tragarm 20 angelenkt ist. Eine Rolle 24 zur Führung entlang der Innenwand einer Rohrleitung ist koaxial zur Schwenkachse der Aufnahme 23 angeordnet. Der Tragarm 20 ist im Bereich seiner Schwenkachse 8 mit einer Stützrolle 15 ausgestattet, um insbesondere bei einem Schwenken des Tragarms 20 in Richtung Pfeil 11 bis in eine Extremposition, wie sie beispielsweise an der Innenwand von Rohrkrümmungen insbesondere geringen Querschnitts auftreten kann, in der der Tragarm 20 im wesentlichen parallel zur Längsmittelachse 9 des Zugteils angeordnet ist, für eine zusätzliche Abstützung des Tragarms 20 zu sorgen. In Fig. 3 ist eine solche Tragstruktur nochmals in Draufsicht gezeigt.

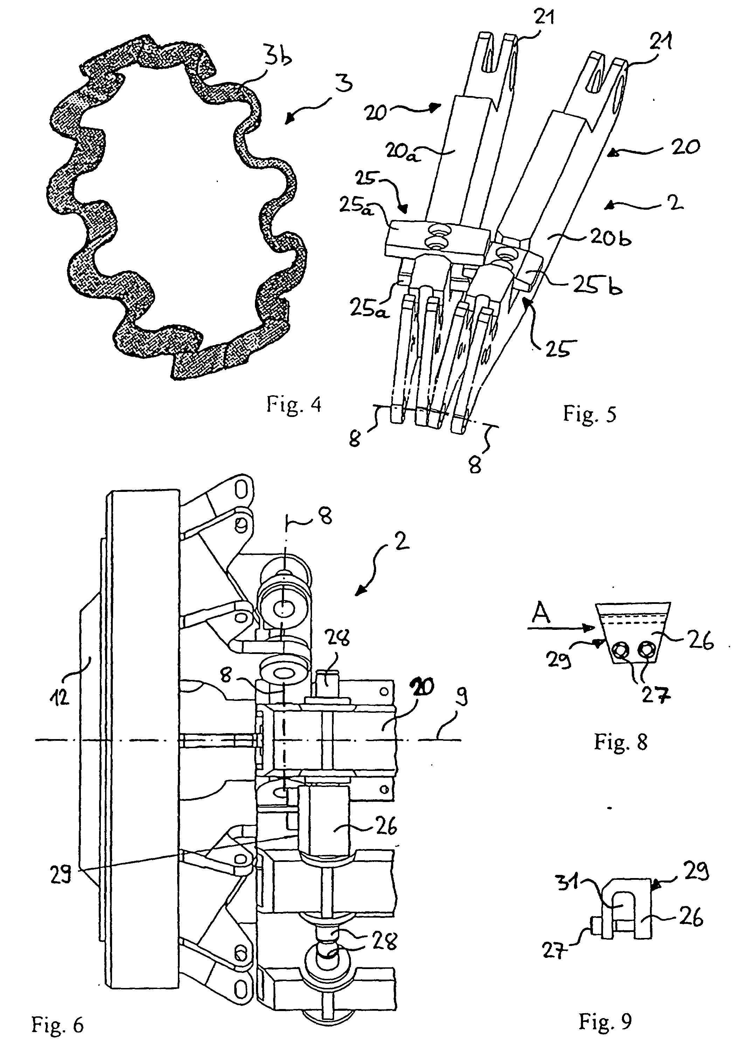

Eine alternative Ausführungsvariante zu den teilzylinderförmigen Dichtelementen 3a gemäß Fig. 1 ist in Fig. 4 in Form eines einstückig ausgebildeten, in Umfangsrichtung gewellten Dichtrings 3b dargestellt. Der Dichtring 3b besteht ebenfalls aus einem flexiblen Material, z.B. aus Polyurethan.

Eine Ausführungsvariante zur Synchronisierung jeweils um eine Schwenkachse 8 schwenkbarer, benachbarter Tragarme 20 einer Tragstruktur 2 ist in Fig. 5 dargestellt. Die Tragarme 20 haben mit Abstand zu ihren Schwenkachsen 8 jeweils abwechselnd eine bzw. zwei Führungsplatten 25, wobei jeweils eine Führungsplatte 25 eines Tragarms 20 - in diesem Fall die Führungsplatte 25b des rechten Tragarms 20b - zwischen jeweils zwei Führungsplatten 25 der benachbarten Tragarme 20 - in diesem Fall die Führungsplatten 25a des linken Tragarms 20a - unter Gewährleistung einer begrenzten Relativbewegung der benachbarten Tragarme 20a, 20b eingreift. Die Tragarme 20 sind beispielsweise unter Gewährleistung eines um zwischen 1° und 5°, insbesondere zwischen 2° und 3°, voneinander abweichenden Winkels zur (nicht dargstellten) Längsmittelachse des Zugteils synchronisiert. Derart wird insbesondere in Rohrverzweigungen ein Ausfedern einzelner Tragarme 20 und somit eine Beschädigung von Dichtelement und/oder Membran verhindert.

Eine Alternative zur Synchronisierung benachbarter Tragarme 20 ist in Fig. 6 in Seitenansicht und in Fig. 7 in Draufsicht dargestellt. Hierbei ist jeder Tragarm 20 mit Abstand zu seiner Schwenkachse 8 mit sich parallel zu dieser erstreckenden Stiften 28 versehen, wobei jeweils zwei Stifte 28 benachbarter Tragarme 20 mit ihren einander zugekehrten Enden in eine ihnen gemeinsame, eine begrenzte Relativbewegung der Stifte 28 gewährleistende Halteeinrichtung 29 ragen, die in der gezeigten Ausführungsform in Form einer Klammer 26 ausgebildet ist. Eine solche Klammer 26 ist beispielsweise im wesentlichen U-förmig ausgebildet und an ihrem offenen Ende mittels Schraubbolzen 27 verschlossen, wobei den in den von U-förmiger Klammer 26 und Schraubbolzen 27 gebildeten Hohlraum 31 der Halteeinrichtung 29 ragenden Stiften 28 eine begrenzte Relativbewegung ermöglicht ist, welche einer begrenzten Abweichung der Winkel zweier benachbarter Tragarme zur Längsmittelachse des Zugteils 10 entspricht.

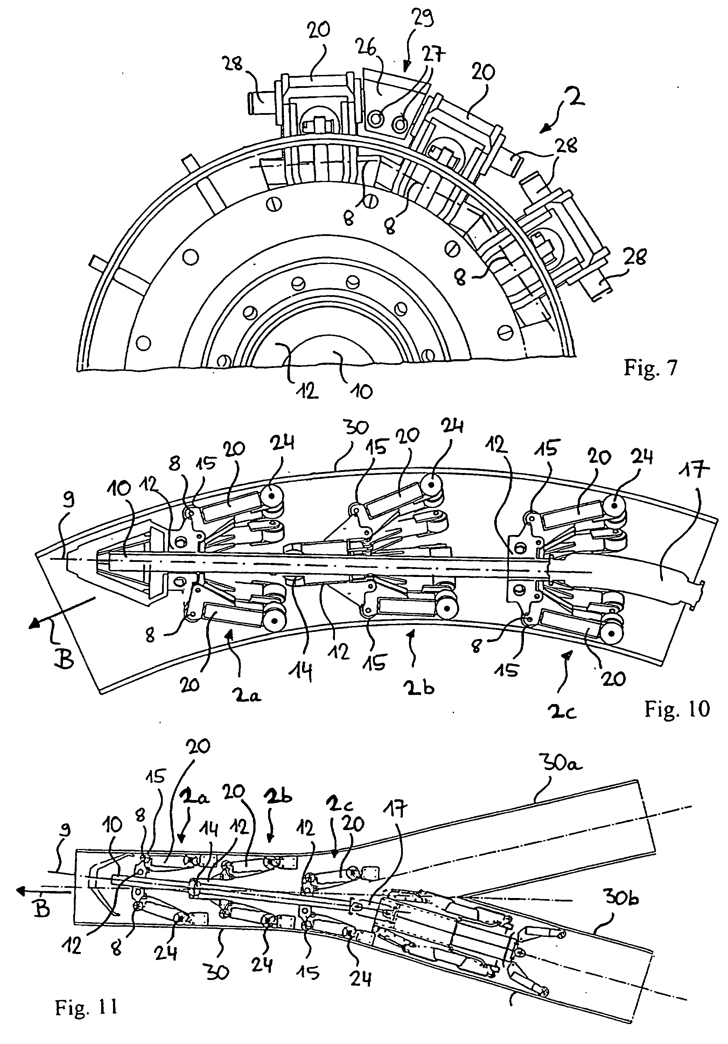

Fig. 10 zeigt eine Ausführungsform einer erfindungsgemäßen Vorrichtung mit drei an einem Zugteil 10 angeordneten Tragstrukturen 2a, 2b, 2c dreier Dichteinrichtungen, wobei aus Gründen der Übersichtlichkeit auf die Darstellung von Dichtelementen und Membranen verzichtet wurde. Die mittlere Tragstruktur 2b der in Richtung Pfeil B durch eine gekrümmte Rohrleitung 30 bewegten Vorrichtung ist über eine Zentralhülse 12 mittels eines Kugellagers 14 radial schwenkbar am Zugteil 10 festgelegt, was den Durchlauf der Vorrichtung durch eine solche Rohrkrümmung 30 in Richtung Pfeil B ermöglicht. Vorzugsweise sind alle Tragstrukturen 2a, 2b, 2c axial verschiebbar am Zugteil 10 festgelegt. Der untere Tragarm 20 der unmittelbar vor einer Kopplungseinrichtung 17 angeordneten Tragstruktur 2c befindet sich in einer Extremposition, in der er fast parallel zur Längsmittelachse 9 des Zugteils 10 angeordnet ist und von einer im Bereich seiner Schwenkachse 8 angeordneten Stützrolle 15 an der Innenwand der Rohrleitung 30 geführt ist.

Wie aus Fig. 11 ersichtlich, sind die Tragarme 20 der Tragstrukturen 2a, 2b, 2c synchronisiert, so daß beim Durchlauf der Vorrichtung durch eine Rohrverzweigung 30a, 30b die Tragarme 20 - im gezeigten Fall der obere Tragarm 20 der Tragstruktur 2c - vor einem radialen Ausfedern gesichert sind und (nicht dargestellte) Dichtelemente oder Membrane nicht beschädigt werden.

### Bezugszeichenliste

- 1: Dichteinrichtung
- 2: Tragstruktur
- 3: Dichtelement
- 3a: teilzylinderförmiges Dichtelement
- 3b: in Umfangsrichtung gewellter Dichtring
- 4: lateraler Endbereich des teilzylindrischen Dichtelements
- 5: Dichtmembran
- 7: Bänder
- 8: Senkrechte zur Längsmittelachse des Zugteils
- 9: Längsmittelachse des Zugteils
- 10: Zugteil
- 12: Zentralhülse
- 14: Kugelgelenk
- 15: Stützrolle
- 17: Kopplungseinrichtung
- 20: Tragarm
- 21: äußeres Ende des Tragarms
- 22: Tellerfederpaket
- 23: Aufnahme für Dichtelement
- 24: Rolle
- 25: Führungsplatte
- 26: Klammer
- 27: Bolzen
- 28: Stifte
- 29: Halteeinrichtung
- 30: Rohrleitung
- 31: Hohlraum der Klammer

## Patentansprüche

1. Dichteinrichtung für einen Molch mit einer Tragstruktur (2) mit veränderbarem Umfang mit wenigstens einem am Umfang der Tragstruktur angeordneten Dichtelement (3) aus einem flexiblen Material, **dadurch gekennzeichnet, dass** das Dichtelement durch mehrere, in Umfangsrichtung nebeneinander angeordnete, mit den lateralen Endbereichen (4) ihrer Außenseiten miteinander in Verbindung stehende, teilzylinderförmige Dichtabschnitte (3a) gebildet ist oder ein einstückig ausgebildeter, in Umfangsrichtung gewellter Dichtring (3b) ist.

2. Vorrichtung nach Anspruch 1, **dadurch gekennzeichnet, dass** das Dichtelement (3) aus einem Polymer, insbesondere aus Polyurethan, besteht.

3. Vorrichtung nach Anspruch 1 oder 2, **dadurch gekennzeichnet, dass** das Dichtelement (3) eine radial innenseitig angeordnete Dichtmembran (5) aufweist.

4. Vorrichtung nach Anspruch 3, **dadurch gekennzeichnet, dass** Dichtelement (3) und Dichtmembran (5) dicht miteinander verbunden sind.

5. Vorrichtung nach Anspruch 3 oder 4, **dadurch gekennzeichnet, dass** die Dichtmembran (5) schlüsselförmig mit einer mit der Konvexität der Dichteinrichtung (1) gleichgerichteter Konvexität ausgebildet ist.

6. Vorrichtung nach einem der Ansprüche 2 bis 5, **dadurch gekennzeichnet, dass** die Dichtmembran (5) ein flexibles Gewebe aufweist.

7. Vorrichtung nach Anspruch 5, **dadurch gekennzeichnet, dass** das Gewebe von netzartig miteinander verwobenen Bändern (7) gebildet ist.

8. Vorrichtung nach einem der Ansprüche 3 bis 7, **dadurch gekennzeichnet, dass** die Membran (5) aus einem Polymer, insbesondere aus einem Polyamid, besteht.

9. Vorrichtung nach einem der Ansprüche 1 bis 8, **dadurch gekennzeichnet, dass** das Dichtelement (3) äußeren Enden (21) von schwenkbaren Tragarmen (20) schwenkbar angelenkt ist.

10. Vorrichtung nach Anspruch 9, **dadurch gekennzeichnet, dass** die Tragarme (20) mit einer Federkraft radial nach außen vorgespannt sind.

11. Vorrichtung nach Anspruch 10, **dadurch gekennzeichnet, dass** jeder Tragarm (20) mittels eines Tellerfederpakets (22) vorgespannt ist.

12. Vorrichtung nach einem der Ansprüche 9 bis 11, **dadurch gekennzeichnet, dass** jeder Tragarm (20) an seinem äußeren Ende (21) eine Rolle (24) zur Führung entlang der Innenwandung einer Rohrleitung (30) aufweist.

13. Vorrichtung nach einem der Ansprüche 9 bis 12, **dadurch gekennzeichnet, dass** jeder Tragarm (2) im Bereich seiner Schwenkachse (8) eine Stützrolle (15) zur Abstützung an der Innenwand von Rohrkrümmungen aufweist.

14. Vorrichtung nach einem der Ansprüche 9 bis 13, **dadurch gekennzeichnet, dass** die Tragarme (20) synchronisiert sind.

15. Vorrichtung nach einem der Ansprüche 9 bis 14, **dadurch gekennzeichnet, dass** die Tragarme (20) mit Abstand zu ihren Schwenkachsen (8) sich parallel zu diesen erstreckende Stifte (28) aufweisen, wobei jeweils zwei Stifte (28) benachbarter Tragarme (20) mit ihren einander zugekehrten Enden in eine ihnen gemeinsame, eine begrenzte Relativbewegung der Stifte (28) gewährleistende Halteeinrichtung (29) ragen.

16. Vorrichtung nach Anspruch 15, **dadurch gekennzeichnet, dass** die Halteeinrichtungen (29) von Klammern (26) gebildet sind.

17. Vorrichtung nach einem der Ansprüche 1 bis 16, **dadurch gekennzeichnet, dass** die Tragarme (20) mit Abstand zu ihren Schwenkachsen (8) jeweils abwechselnd eine bzw. zwei Führungsplatten (25) aufweisen, wobei jeweils eine Führungsplatte (25) eines Tragarms (20) zwischen jeweils zwei Führungsplatten (25) der benachbarten Tragarme (20), unter Gewährleistung einer begrenzten Relativbewegung eingreift.

18. Vorrichtung nach einem der Ansprüche 9 bis 16, **dadurch gekennzeichnet, dass** jeder Tragarm (20) mit Abstand zu seiner Schwenkachse (8) eine in Richtung des einen benachbarten Tragarms (20) gerichtete Führungsplatte (25) und zwei in Richtung des anderen benachbarten Tragarms (20) gerichtete Führungsplatten (25) aufweist, wobei die in Richtung des einen benachbarten Tragarms (20) gerichtete Führungsplatte jeweils unter Gewährleistung einer begrenzten Relativbewegung zwischen die zwei Führungsplatten dieses benachbarten Tragarms (20) eingreift.

19. Vorrichtung zum Bewegen eines Molches durch eine Rohrleitung, wie eine Pipeline, mit wenigstens einem Zugteil mit wenigstens einer Dichteinrichtung nach einem der Ansprüche 1 bis 18.

20. Vorrichtung nach Anspruch 19, **dadurch gekennzeichnet, dass** die Tragstruktur (2) um jeweils zur Längsmittelachse (9) des Zugteils (10) senkrechte Achsen (8) schwenkbare, im wesentlichen strahlenartig angeordnete Tragarme (20) aufweist.

21. Vorrichtung nach Anspruch 19 oder 20, **dadurch gekennzeichnet, dass** jeweils zwei benachbarte Tragarme (20) unter Gewährleistung eines um zwischen 1° und 5°, insbesondere zwischen 2° und 3°, voneinander abweichenden Winkels zur Längsmittelachse (9) des Zugteils (10) synchronisiert sind.

22. Vorrichtung nach einem der Ansprüche 14 bis 21, **dadurch gekennzeichnet, dass** die Tragstruktur (2) über eine am Zugteil (10) festlegbare Zentralhülse (12) an diesem befestigt ist.

23. Vorrichtung nach Anspruch 22, **dadurch gekennzeichnet, dass** die Zentralhülse (12) begrenzt axial verschiebbar am Zugteil (10) festgelegt ist.

24. Vorrichtung nach Anspruch 23, **dadurch gekennzeichnet, dass** die Zentralhülse (12) gegen Federwirkung axial veschiebbar am Zugteil (10) festgelegt ist.

25. Vorrichtung nach einem der Ansprüche 22 bis 24, **dadurch gekennzeichnet, dass** die Zentralhülse (12) radial schwenkbar am Zugteil (10) festgelegt ist.

26. Vorrichtung nach Anspruch 25, **dadurch gekennzeichnet, dass** die Zentralhülse (12) über ein Kugelgelenk (14) am Zugteil (10) festgelegt ist.

27. Vorrichtung nach einem der Ansprüche 19 bis 26, **dadurch gekennzeichnet, dass** wenigstens zwei an einem Zugteil (19) angeordnete Dichteinrichtungen (1) vorgesehen sind.

28. Vorrichtung nach Anspruch 27, **dadurch gekennzeichnet, dass** wenigstens eine Dichteinrichtung (1) am Zugteil (10) radial schwenbar ist.

## Claims

1. Sealing means for a pig having a supporting structure (2) with variable circumference and having at least one sealing element (3), made from a flexible material, disposed on the circumference of the supporting structure (2), **characterized in that** the sealing element is formed from several partially-cylindrical sealing sections (3a) which are disposed next to one another in the circumferential direction and communicate with each other at lateral end regions (4) of their outer sides or is a sealing ring (3b) formed as a single piece and corrugated in the circumferential direction.

2. Device according to claim 1, **characterized in that** the sealing element (3) comprises a polymer, in particular, polyurethane.

3. Device according to claim 1 or 2, **characterized in that** the sealing element (3) comprises a radially inwardly disposed sealing diaphragm (5).

4. Device according to claim 3, **characterized in that** the sealing element (3) and the sealing diaphragm (5) are firmly connected to one another.

5. Device according to claim 3 or 4, **characterized in that** the sealing diaphragm (5) is bowl-shaped with a convex form oriented in a same direction as the convex shape of the sealing means (1).

6. Device according to any one of the claims 2 through 5, **characterized in that** the sealing diaphragm (5) comprises a flexible texture.

7. Device according to claim 5, **characterized in that** the texture is formed of net-like interwoven bands (7).

8. Device according to any one of the claims 3 through 7, **characterized in that** the diaphragm (5) is made from a polymer, in particular, a polyamide.

9. Device according to any one of the claims 1 to 8, **characterized in that** the sealing element (3) is pivotably hinged at the outer ends (21) of pivotable supporting arms (20).

10. Device according to claim 9, **characterized in that** the supporting arms (20) are biased radially outwardly by a spring force.

11. Device according to claim 10, **characterized in that** each supporting arm (20) is biased by a disc spring set (22).

12. Device according to any one of the claims 9 through 11, **characterized in that** each supporting arm (20) comprises a roller (24) at its outer end (21) for guidance along the inner wall of a conduit (30).

13. Device according to any one of the claims 9 through 12, **characterized in that** each supporting arm (2) comprises a supporting roller (15) in the region of its pivot axis (8) for support on the inner wall of pipe bends.

14. Device according to any one of the claims 9 through 13, **characterized in that** the supporting arms (20) are synchronized.

15. Device according to any one of the claims 9 to 14, **characterized in that** the supporting arms (20) comprise pins (28) extending parallel to and at a separation from their pivot axis (8), wherein two pins (28) of neighboring supporting arms (20) project, in each case, with their facing ends into a common holding means (29) to limit a relative motion of the pins (28).

16. Device according to claim 15, **characterized in that** the holding means (29) are clamps (26).

17. Device according to any one of the claims 1 to 16, **characterized in that** the supporting arms (20) alternately comprise one and two guiding plates (25) each disposed at a separation from their pivot axes (8), wherein one guiding plate (25) of a supporting arm (20) engages between two guiding plates (25) of the neighboring supporting arms (20) to ensure limited relative motion.

18. Device according to claim 9 to 16, **characterized in that** each supporting arm (20) comprises, at a separation from its pivot axis (8), one guiding plate (25) oriented in the direction of the one neighboring supporting arm (20) and two guiding plates (25) oriented in the direction of the other neighboring supporting arm (20), wherein the guiding plate oriented towards the one neighboring supporting arm (20) engages between the two guiding plates of the neighboring supporting arm (20) to thereby ensure limited relative motion.

19. Device for moving a pig through a conduit, such as a pipeline, with at least one pulling member having at least one sealing means according to any one of the claims 1 to 18.

20. Device according to claim 19, **characterized in that** the supporting structure (2) comprises supporting arms (20) disposed substantially radially, and pivotable about axes (8) disposed perpendicular to the longitudinal central axis (9) of the pulling element (10).

21. Device according to claim 19 or 20, **characterized in that** all pairs of neighboring supporting arms (20) are synchronized to maintain angles relative to the longitudinal central axis (9) of the pulling element (10) which vary between 1° and 5°, in particular, between 2° and 3°.

22. Device according to any one of the claims 14 through 21, **characterized in that** the supporting structure (2) is mounted to the pulling element (10) via a central sleeve (12) which can be fixed thereto.

23. Device according to claim 22, **characterized in that** the central sleeve (12) is mounted on the pulling element (10) for limited axial displacement.

24. Device according to claim 23, **characterized in that** the central sleeve (12) is mounted on the pulling element (10) for axial displacement in opposition to the force of a spring.

25. Device according to any one of the claims 22 to 24, **characterized in that** the central sleeve (12) is mounted on the pulling element (10) in a radially pivotable fashion.

26. Device according to claim 25, **characterized in that** the central sleeve (12) is mounted on the pulling element (10) via a ball and socket joint (14).

27. Device according to any one of the claims 19 though 26, **characterized in that** at least two sealing means (1) are provided on one pulling element (19).

28. Device according to claim 27, **characterized in that** at least one sealing means (1) can be radially pivoted on the pulling element (10).

## Revendications

1. Dispositif d'étanchéité pour une sonde comprenant une structure porteuse (2) à périmètre modifiable présentant au moins un élément d'étanchéité (3) réalisé dans un matériau flexible disposé sur le périmètre de la structure porteuse, **caractérisé en ce que** l'élément d'étanchéité est formé par plusieurs tronçons d'étanchéité (3a) disposés côte à côte dans le sens périmétrique, en contact mutuel par les zones d'extrémité (4) latérales de leurs faces extérieures, de forme partiellement cylindrique, ou est constitué par un joint annulaire d'étanchéité (3b) réalisé d'une seule pièce, ondulé périmétriquement.

2. Dispositif selon la revendication 1, **caractérisé en ce que** l'élément d'étanchéité (3) est constitué d'un polymère, en particulier de polyuréthane.

3. Dispositif selon la revendication 1 ou 2, **caractérisé en ce que** l'élément d'étanchéité (3) présente une membrane d'étanchéité (5) disposée radialement sur la face interne.

4. Dispositif selon la revendication 3, **caractérisé en ce que** l'élément d'étanchéité (3) et la membrane d'étanchéité (5) sont reliés entre eux de manière étanche.

5. Dispositif selon la revendication 3 ou 4, **caractérisé en ce que** la membrane d'étanchéité (5) est conformée en clé et présente une convexité orientée dans le même sens que la convexité du dispositif d'étanchéité (1).

6. Dispositif selon l'une quelconque des revendications 2 à 5, **caractérisé en ce que** la membrane d'étanchéité (5) présente un tissu flexible.

7. Dispositif selon la revendication 5, **caractérisé en ce que** le tissu est constitué de bandes (7) entrelacées à la manière d'un filet.

8. Dispositif selon l'une quelconque des revendications 3 à 7, **caractérisé en ce que** la membrane (5) est réalisée dans un polymère, en particulier dans un polyamide.

9. Dispositif selon l'une quelconque des revendications 1 à 8, **caractérisé en ce que** l'élément d'étanchéité (3) est articulé pivotant aux extrémités extérieures (21) de bras de soutien (20) pivotants.

10. Dispositif selon la revendication 9, **caractérisé en ce que** les bras de soutien (20) sont précontraints radialement vers l'extérieur par une force élastique.

11. Dispositif selon la revendication 10, **caractérisé en ce que** chaque bras de soutien (20) est précontraint au moyen d'en ensemble de rondelles à effet de ressort (22).

12. Dispositif selon l'une quelconque des revendications 9 à 11, **caractérisé en ce que** chaque bras de soutien (20) présente à son extrémité extérieure (21) un galet (24) pour le guidage le long de la paroi intérieure d'une conduite (30).

13. Dispositif selon l'une quelconque des revendications 9 à 12, **caractérisé en ce que** chaque bras de soutien (2) présente dans la zone de son axe de pivotement (8) un galet d'appui (15) pour l'appui contre la paroi intérieure de conduites coudées.

14. Dispositif selon l'une quelconque des revendications 9 à 13, **caractérisé en ce que** les bras de soutien (20) sont synchronisés.

15. Dispositif selon l'une quelconque des revendications 9 à 14, **caractérisé en ce que** les bras de soutien (20) présentent des broches (28) à distance de leurs axes de pivotement (8) et s'étendant parallèles à ceux-ci, deux broches (28) de bras de soutien (20) contigus entrant à chaque fois par leurs extrémités en regard dans un dispositif de maintien (29) commun autorisant un mouvement relatif limité des broches (28).

16. Dispositif selon la revendication 15, **caractérisé en ce que** les dispositifs de maintien (29) sont constitués par des pinces (26).

17. Dispositif selon l'une quelconque des revendications 1 à 16, **caractérisé en ce que** les bras de soutien (20) présentent à distance de leurs axes de pivotement (8) à chaque fois alternativement une ou deux plaques de guidage (25), une plaque de guidage (25) d'un bras de soutien (20) entrant en prise à chaque fois entre deux plaques de guidage (25) des bras de soutien (20) contigus, en autorisant un mouvement relatif limité.

18. Dispositif selon l'une quelconque des revendications 1 à 16, **caractérisé en ce que** chaque bras de soutien (20) présente à distance de son axe de pivotement (8) une plaque de guidage (25) orientée dans la direction de l'un des bras de soutien (20) contigus et deux plaques de guidage (25) orientées dans la direction de l'autre bras de soutien (20) contigu, la plaque de guidage orientée en direction de l'un des bras de soutien (20) contigus entrant en prise à chaque fois entre les deux plaques de guidage de ce bras de soutien (20) contigu en autorisant un mouvement relatif limité.

19. Dispositif pour déplacer une sonde dans une conduite, telle qu'un pipeline, comprenant au moins une partie tractive présentant au moins un dispositif d'étanchéité selon l'une quelconque des revendications 1 à 18.

20. Dispositif selon la revendication 19, **caractérisé en ce que** la structure porteuse (2) présente des bras de soutien (20) disposés sensiblement selon des rayons, pivotant à chaque fois autour d'axes (8) perpendiculaires à l'axe médian longitudinal (9) de la partie tractive (10).

21. Dispositif selon la revendication 19 ou 20, **caractérisé en ce qu'**à chaque fois deux bras de soutien (20) contigus sont synchronisés en garantissant pour chacun un angle par rapport à l'axe médian longitudinal (9) de la partie tractive (10) divergeant l'un par rapport à l'autre d'un angle d'environ 1 à 5°, en particulier d'environ 2 à 3°.

22. Dispositif selon l'une quelconque des revendications 14 à 21, **caractérisé en ce que** la structure porteuse (2) est fixée sur la partie tractive (10) par un manchon central (12) pouvant être fixé sur celle-ci.

23. Dispositif selon la revendication 22, **caractérisé en ce que** le manchon central (12) est fixée sur la partie tractive (10) déplaçable axialement de manière limitée.

24. Dispositif selon la revendication 23, **caractérisé en ce que** le manchon central (12) est fixé à la partie tractive (10) déplaçable axialement contre l'effet ressort.

25. Dispositif selon l'une quelconque des revendications 22 à 24, **caractérisé en ce que** le manchon central (12) est fixé pivotant radialement sur la partie tractive (10).

26. Dispositif 125, **caractérisé en ce que** le manchon central (12) est fixé sur la partie tractive (10) au moyen d'un joint sphérique (14).

27. Dispositif selon l'une quelconque des revendications 19 à 26, **caractérisé en ce qu'**au moins deux dispositifs d'étanchéité (1) sont prévus sur une partie tractive (19).

28. Dispositif selon la revendication 27, **caractérisé en ce qu'**au moins un dispositif d'étanchéité (1) est monté pivotant radialement sur la partie tractive (10).
